Europäisches Patentamt

European Patent Office

Office européen des brevets

(11) Veröffentlichungsnummer: **0 373 502**
**A2**

## (12) EUROPÄISCHE PATENTANMELDUNG

(21) Anmeldenummer: 89122551.8

(22) Anmeldetag: 07.12.89

(51) Int. Cl.5: **B62B 15/00, B63B 7/02**

(30) Priorität: 12.12.88 DE 3841799

(43) Veröffentlichungstag der Anmeldung:
**20.06.90 Patentblatt 90/25**

(84) Benannte Vertragsstaaten:
**AT BE CH DE ES FR GB GR IT LI LU NL SE**

(71) Anmelder: **Astner, Wolfgang**
**Im Grund 22**
**D-8033 Planegg(DE)**

(72) Erfinder: **Astner, Wolfgang**
**Im Grund 22**
**D-8033 Planegg(DE)**

(74) Vertreter: **Kraus, Walter, Dr. et al**
**Patentanwälte Kraus, Weisert & Partner**
**Thomas-Wimmer-Ring 15**
**D-8000 München 22(DE)**

(54) **Sportgerät, das als Rodelschlitten verwendbar ist.**

(57) Mit der Erfindung wird ein Sportgerät zur Verfügung gestellt, das einen innen hohlen Körper aus Kunststoff umfaßt. Der zweiteilig ausgeführte Körper besteht aus einem bootartigen, doppelwandigen Unterteil mit einer nach oben offenen Vertiefung, und aus einer flachen Abdeckung, welche die Vertiefung im zusammengefügten Zustand dieser beiden Teile verschließt. Sowohl das Unterteil als auch die Abdeckung sind als hohle Kunststoffteile ausgebildet und fest aufeinander anbringbar. Das Sportgerät ist im Winter als Sitz-Rodelschlitten und als Liege-Rodelschlitten verwendbar, während es im Sommer als Badeboard verwendet werden kann; seine beiden Teile sind außerdem im Sommer als Boot bzw. als Funboard zu verwenden.

EP 0 373 502 A2

## Sportgerät, das als Rodelschlitten verwendbar ist

Die Erfindung betrifft ein Sportgerät, das als Rodelschlitten verwendbar ist, umfassend einen innen hohlen Körper aus Kunststoff.

Rodelschlitten aus Kunststoff sind in den verschiedensten Ausführungen bekannt sowie in Spielwaren- und Sportartikelgeschäften erhältlich. Je nach Ausführungsform haben die derzeit bekannten und verfügbaren Rodelschlitten einen oder mehrere der folgenden Nachteile:

(a) Der oder die Benutzer, bei dem oder denen es sich meistens um ein Kind bzw. Kinder handelt,sitzt bzw. sitzen zu tief auf dem Rodelschlitten, so daß es bei Zusammenstößen oder anderen Unfällen dazu kommen kann, daß der Kopf gegen eines oder beide Knie anschlägt.

(b) Der Kunststoff-Rodelschlitten ist zwar dazu geeignet, daß der Benutzer darin oder darauf sitzt, er ist jedoch nicht dazu geeignet, daß der Benutzer mit diesem Rodelschlitten auf dem Bauche liegend rodeln kann.

(c) Der Rodelschlitten hat keinerlei abgeschlossenen Stauraum, in dem Kleidungsstücke, wie beispielsweise ein Anorak, eine Mütze, Handschuhe o. dgl. und/oder eine Brotzeit untergebracht werden können, obwohl bei einerlängerzeitigen Benutzung des Rodelschlittens nicht nur das Bedürfnis besteht, eine Brotzeit mitzunehmen, sondern sich der Benutzer gelegentlich, wenn es ihm zu warm wird, seines Anoraks, seiner Mütze und oder Handschuhe entledigen will.

(d) Der Rodelschlitten ist nur im Winter zum Rodeln, nicht jedoch als vielseitiges,auch im Sommer brauchbares Sportgerät verwendbar.

Aufgabe der vorliegenden Erfindung ist es insbesondere, ein Sportgerät zur Verfügung zu stellen, das in vielseitiger Weise nicht nur als Rodelschlitten verwendbar und im übrigen frei von den sonstigen oben aufgezeigten Nachteilen ist.

Diese Aufgabe wird mit einem Sportgerät der eingangs genannten Art erfindungsgemäß dadurch gelöst, daß der Körper ein bootartiges doppelwandiges Unterteil mit einer nach oben offenen, flachen Vertiefung und eine die Vertiefung verschließende flache Abdeckung umfaßt, die beide als innen hohle Kunststoffteile ausgebildet und mit einer Vorrichtung zum festen Anbringen der Abdeckung auf dem Unterteil versehen sind.

Auf diese Weise wird ein im wesentlichen zweiteiliges Sportgerät erhalten, das insbesondere folgende Vorteile hat:

(1) Der oder die Benutzer sitzt bzw. sitzen hoch genug auf der die Vertiefung verschließende Abdeckung, so daß Verletzungen durch eine Kollision der Knie mit dem Kopf des Benutzers oder der Benutzer bei Kollisionen oder sonstigen Unfällen ausgeschlossen werden.

(2) Der Benutzer kann den Rodelschlitten sowohl in der Weise benutzen, daß er sich auf die flache Abdeckung setzt, als auch in der Weise, daß er sich bäuchlings oder mit dem Rücken auf die flache Abdeckung legt.

(3) Die durch die flache Abdeckung verschlossene Vertiefung ergibt einen geschlossenen Stauraum für Kleidungsstücke,wie beipielsweise einen Anorak, eine Mütze, Handschuhe o. dgl. und für Proviant, wie beispielsweise eine Bortzeit.

(4) Das erfindungsgemäße Sportgerät ist nicht nur im Winter als Rodelschlitten verwendbar, sondern es kann im Sommer in vielfältiger Weise als Boot und Funboard oder als Badeboard verwendet werden, und zwar läßt sich das Unterteil als Boot verwenden, die flache Abdeckung kann als Funboard verwendet werden, das heißt als brettartige Schwimmhilfe, und schließlich ist das aus Unterteil und falcher Abdeckung zusammengefügte Sportgerät als Badeboard verwendbar, das heißt als eine Auflage, die den Benutzer durch ihren relativ großen Auftrieb im wesentlichen über Wasser hält, während dagegen die flache Abdeckung für sich wegen ihres demgegenüber verminderten Auftriebs als Funboard mehr oder weniger eine vom Benutzer unter das Wasser gedrückte Schwimmhilfe ist.

In einer bevorzugten Ausführungsform ist das erfindungsgemäße Sportgerät so ausgebildet, daß die seitlichen Ränder der Abdeckung formschlüssig in die Vertiefung passen und von diesen seitlichen Rändern Vorsprünge nach der Seite zu vorstehen, die sich mit ihrer Ober- oder Unterseite auf den oberen Rändern der Vertiefung abstützen.

Auf diese Weise kann ·die Abdeckung gewissermaßen in die Vertiefung des Unterteils "hineingesteckt" werden, wobei die Vorsprünge ein zu tiefes Hineinstecken verhindern, so daß die Abdeckung weit genug über den oberen Rand der Vertiefung und damit des Unterteils nach oben vorsteht.

In einer besonders bevorzugten Ausführungsform des erfindungsgemäßen Sportgeräts weist die Abdeckung auf ihrer Oberseite Sitzmulden auf, während sie auf ihrer Unterseite eben ist, wobei es zu bevorzugen ist, daß die Abdeckung insgesamt im Längsschnitt keilförmig ausgebildet ist, und wobei es weiter zu bevorzugen ist, daß die Unterseiten der Vorsprünge in gleichen Vertikalabständen von der Ebene der Unterseite angeordnet sind.

Diese besonders bevorzugte Ausführungsform ermöglicht es,

(a) entweder die Abdeckung so auf dem Unterteil anzubringen, daß die mit Sitzmulden versehene Oberseite nach oben zu liegen kommt, wobei durch die Keilform gewährleistet wird, daß die in Fahrtrichtung hintere Sitzmulde höher als die in Fahrtrichtung vordere Sitzmulde positioniert sein kann oder gleichhoch positioniert werden kann.

(b) oder die Abdeckung so auf dem Unterteil anzubringen, daß ihre flache, insbesondere ebene, Unterseite nach oben gerichtet ist, und zwar derart, daß diese ebene Oberseite praktisch bündig mit dem oberen Rand der Vertiefung bzw. des Unterteils ist, wobei unter "praktisch bündig" zu verstehen sein soll, daß die ebene Unterseite relativ zurDicke der Abdeckung nur wenig über den oberen Rand der Vertiefung bzw. des Unterteils vorsteht, und zwar vorzugsweise an jeder Stelle dieses oberen Randes im gleichen Maße, welchesder Dicke der Vorsprünge und der Einstecktiefe der Abdeckung in das Unterteil im umgekehrten Falle, das heißt bei nach oben gerichteter Oberseite,entspricht.

In einer bevorzugten Ausführungsform des Sportgeräts nach der Erfindung sind die Vorsprünge als Haltegriffe ausgebildet, wodurch die Vorsprünge eine für den Benutzer nicht nur völlig ungefährliche, sondern darüber hinaus außerordentlich hilfreiche Form erhalten.

Um die Abdeckung nicht nur in der horizontalen Ebene fest an dem Unterteil anzubringen, sondern auch eine in vertikaler Richtung feste Anbringung der Abdeckung auf dem Unterteil zu erzielen, kann das erfindungsgemäße Sportgerät so ausgebildet sein, daß die Vorrichtung zum festen Anbringen der Abdeckung auf dem Unterteil wenigstens ein Verriegelungselement an der Abdeckung und wenigstens ein damit in Verriegelungseingriff bringbares Gegenverriegelungselement an dem Unterteil umfaßt, deren Verriegelungseingriff Unterteil und Abdeckung fest miteinander verbindet.

Insbesondere kann das Verriegelungselement ein Filmscharnier mit einem Sperriegel an dessen freiem Ende und das Gegenverriegelungselement eine Hinterschneidung sein, in welche der Sperriegel einrastet, oder umgekehrt, wobei vorzugsweise die Hinterschneidung in eine Ausnehmung für das Filmscharnier übergeht.

Besonders zu bevorzugen ist es, daß am vorderen und hinteren Ende des Unterteils und der Abdeckung je ein Verriegelung-bzw. Gegenverriegelungselement vorgesehen ist, da auf diese Weise in Verbindung mit der formflüssigen Ineinandersteckbarkeit von Unterteil und Abdeckung eine für die Praxis völlig ausreichende allseitig feste Anbringung der Abdeckung auf dem Unterteil gewährleistet wird.

Vorzugsweise sind das Verriegelungs- und Gegenverriegelungselement in der Längsmitte des vorderen und hinteren Endes des Unterteils der Abdeckung vorgesehen, also, bezogen auf die bootartige Gestaltung in der Bugmitte und in der Heckmitte.

Das Sportgerät nach der Erfindung ist insbesondere so ausgebildet, daß das Unterteil die generelle Form eines flachen, langgestrecken, oben offenen Kastens hat. Obwohl der flache Kasten auch einen generell elliptischen oder trapezförmigen Grundriß haben kann, ist es doch zu bevorzugen, daß er einen generell rechteckigen Grundriß mit einer gerundeten Schmalseite am vorderen Ende aufweist. Auf diese Weise ergibt sich eine pontonartige Bootform des Unterteils. Eine sowohl für die Verwendung des erfindungsgemäßen Sportgeräts als Rodelschlitten als auch für dessen Verwendung als Boot besonders geeignete Form erhält man,wenndas erfindungsgemäße Sportgerät so ausgebildet ist, daß sich die Vertiefung am vorderen Ende keilförmig verjüngt, indem der Boden des Kastens am vorderen Kastenende schräg nach oben zu verläuft.

Schließlich ist es zu bevorzugen, daß die Schlittenkufen, die vorzugsweise einstückig mit dem Unterteil ausgebildet sind, seitlich über die äußeren Seitenwände des Unterteils, insbesondere des flachen, langgestreckten Kastens, vorstehen, so daß die Oberseiten dieser Kufen als Auflageflächen für die Füße des Benutzers bzw. der Benutzer zur Verfügung stehen.

Insbesondere für den Verwendungszweck des erfindungsgemäßen Sportgeräts als Rodelschlitten kann die gegenüber den Kufen vertiefte Außenfläche des Bodens mit Führungsrillen versehen sein, welche parallel zu den Kufen verlaufen.

Endliche können das Unterteil und/oder die Abdeckung aus Polyäthylen oder einem ähnlichen Kunststoff hergestellt sein, und zwar sind ganz besonders bevorzugt das Unterteil und die Abdeckung aus dem Kunststoff hohl geblasen, so daß sie ausgezeichnet schwimmen und im übrigen sehr leicht und formstabil sind, sowie eine sehr zähe Außenhaut haben.

Die Erfindung sei nachstehend anhand einer in den Figuren 1 bis 6 der Zeichnung dargestellten, besonders bevorzugten Ausführungsform näher erläuter; es zeigen:

Figur 1 eine perspektivische Ansicht einer Ausführungsform eines erfindungsgemäßen Sportgeräts schräg von vorn in dem Zustand, in welchem die Abdeckung so auf dem Unterteil fest angebracht ist, daß ihre mit Sitzmulden versehene Oberseite freiliegt;

Figur 2 eine perspektivische Ansicht des Sportgeräts der Figur 1 schräg von vorn, wobei die Abdeckung vom Unterteil abgehoben dargestellt ist;

Figur 3 eine perspektivische Ansicht des Sportgeräts der Figur 1 schräg von vorn, wobei die Abdeckung derart fest auf dem Unterteil angebracht ist, daß die ebene Unterseite derselben freiliegt, also nach oben gerichtet ist;

Figur 4 eine Vorderansicht des Sportgeräts der Figur 1 in dem dort dargestellten Zusammenbauzustand, welche insbesondere das Verriegelungs- und Gegenverriegelungselement zeigt, mit denen die Abdeckung am in Fahrtrichtung vorderen Ende des Unterteils befestigt ist;

Figur 5 eine perspektivische Ansicht des Sportgeräts der Figur 1 schräg von hinten, wobei die Abdeckung, ähnlich wie in Figur 2, von dem Unterteil abgehoben ist, so daß insbesondere das Verriegelungselement und das Gegenverriegelungselement zu sehen sind, mit denen die Abdek-kung am in Fahrtrichtung hinteren Ende des Unterteils lösbar befestigbar ist, und zwar vorliegend in gleicher Weise wie am vorderen Ende;

Figur 6 eine perspektivische Ansicht auf die Unterseite des Unterteils des Sportgeräts der Figur 1 schräg von hinten; und

Figur 7 einen Teilquerschnitt durch eine besonders bevorzugte Ausführungsform in der Zusammenbaukonfiguration der Figur 3.

Wie aus den Figuren der Zeichnungen ersichtlich ist, steht das darin gezeigte Sportgerät, das sowohl als Rodelschlitten als auch als Badeboard oder als Boot und Funboard verwendbar ist, aus einem bootartigen,doppelwandigen Unterteil 1, welches eine nach oben offene, flache Vertiefung 2 hat, und aus einer die Vertiefung verschließenden, flachen Abdeckung 3.

Sowohl das Unterteil 1 also auch die Abdek-kung 3 sind als innen hohle Kunststoffteile ausgebildet, insbesondere aus Kunststoff hohl geblasen, so daß sie sehr leicht und ausgezeichnet schwimmfähig sind. Damit diese Schwimmfähigkeit erhalten bleibt, ist der Hohlraum des Unterteils und der Abdeckung jeweils geschlossen, indem der Kunststoff als eine den Hohlraum dicht umschließende Wand ausgebildet ist.

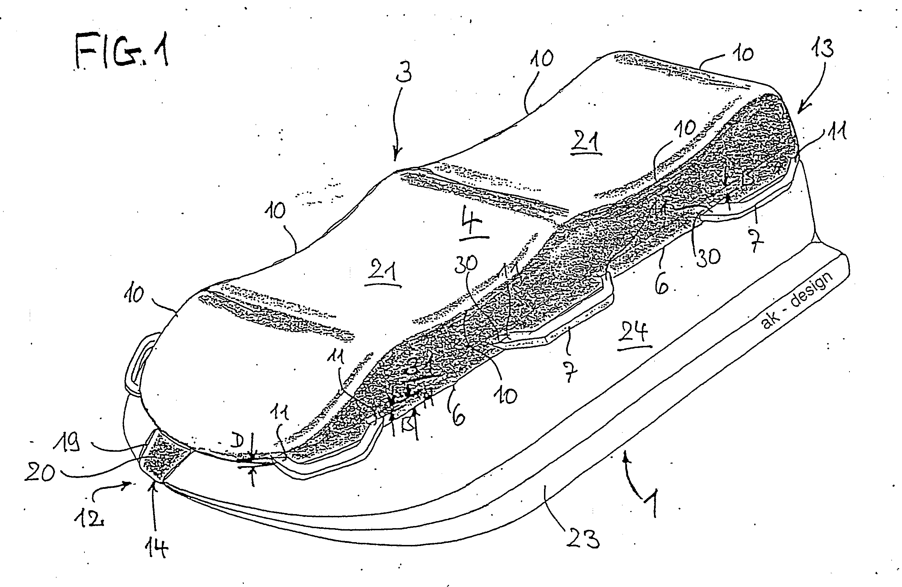

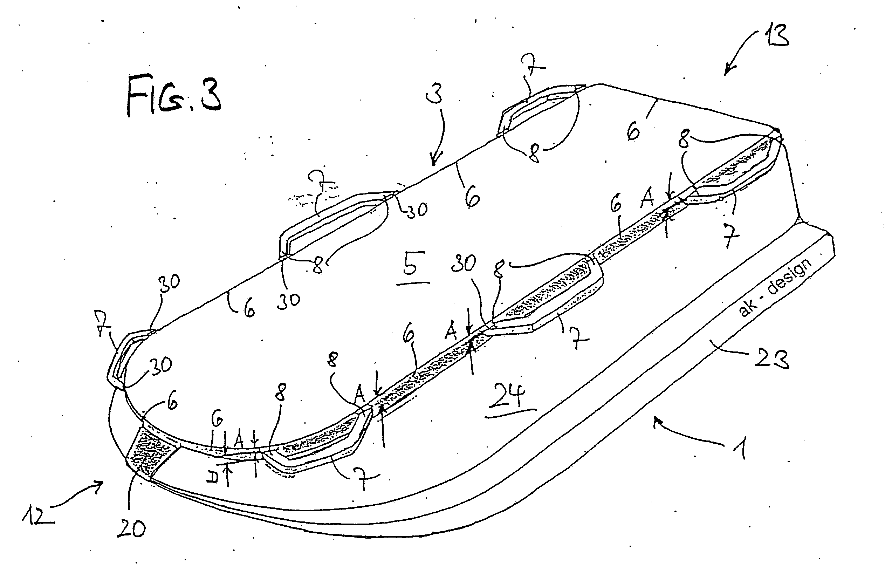

Die Abdeckung 3 ist fest, jedoch lösbar auf dem Unterteil 1 anbringbar, und zwar derart, daß sie hierbei die Vertiefung 2 verschließt, und zwar entweder so, daß ihre Oberseite 4, wie in Figur 1 dargestellt, oder ihre Unterseite 5, wie in Figur 3 dargestellt, nach oben gerichtet ist. Es sei hier darauf hingewiesen, daß die Bezeichnung der einen großflächigen Seite der Abdeckung 3 als Oberseite und die Bezeichnung der anderen großflächigen Seite der Abdeckung 3 als Unterseite lediglich zu Unterscheidungszwecken dieser beiden Seiten verwendet wird, da jede dieser beiden Seiten im praktischen Gebrauch je nach der Art der Verwendung des Sportgeräts entweder nach oben oder nach unten gerichtet sein kann.

Um die Abdeckung 3 in der vorgenannten Weise lösbar und fest auf dem Unterteil 1 anbringen zu können, ist das dargestellt Sportgerät in folgender Weise ausgebildet:

Der untere seitliche Rand 6 oder untere Umfangsrand 6 der Abdeckung 3 paßt formschlüssig in die Vertiefung 2, und von diesem seitlichen Rand 6 stehen Vorsprünge 7 in der Form von Haltegriffen nach der Seite zu vor. Diese Vorsprünge 7 stützen sich mit ihrer Unterseite 8 auf in seitlichen oberen Rändern 9 bzw. dem oberen Umfangsrand 9 der Vertiefung 2 ab. Damit die Unterseite 5 der Abdeckung 3 formschlüssig in die Vertiefung 2 eingefügt werden kann, sind die Unterseiten 8 der Vorsprünge 7 in einem vorbestimmten Vertikalabstand A von der ebenen Unterseite 5 angeordnet, wie besonders gut aus Figur 3 ersichtlich ist, in welcher die Unterseiten 8 der Vorsprünge 7 nach oben gerichtet sind.

Um die Abdeckung 3 in der Weise am Unterteil 1 anbringen zu können, wie in Figur 3 gezeigt ist, das heißt mit der ebenen Unterseite 5 nach oben zu, paßt der obere seitliche Rand 10 oder der obere Umfangsrand 10 der Abdeckung 3 mühelos in die Vertiefung 2, und dann, das heißt in der Zusammenbaukonfiguration der Figur 3, stützen sich die seitlichen Ränder der Vorsprünge 7 mit ihrer Oberseite 11 auf den oberen Rändern 9 der Vertiefung 2 ab, wobei die Abdeckung 3 innerhalb einer Vertikalhöhe B über der Querseite 11 der Vorsprünge 7 formschlüssig in die Vertie fung 7 paßt. Die Vertikalhöhe B ist vorzugsweise gleich dem Vertikalabstand A.

Durch dieses formschlüssige Zusammenpassen des unteren seitlichen Rands 6 bzw. des Vertikalhöhenbereichs B der Abdeckung 3 mit dem oberen Rand 9 der Vertiefung 2, und zwar genauer gesagt, mit dem inneren oberen Rand 29, wird zwar ein festes, lösbares Anbringen der Abdeckung 3 auf dem Unterteil 1 in der Horizontalebene erzielt, nicht jedoch in vertikaler Richtung. Um ein festes, lösbares Anbringen auch in vertikaler Richtung zu erreichen, ist am vorderen Ende 12 und am hinteren Ende 13 des Sportgeräts je eine Vorrichtung 14 vorgesehen, die jeweils aus einem Ver-riegelungselement 15 und einem Gegenverriege-lungselement 16 besteht, wobei in der dargestellten Ausführungsform das Verriegelungselement 15 jeweils an der Abdeckung 3 angebracht ist, während das Gegenverriegelungselement 16 jeweils am Unterteil 1 vorgesehen ist; es ist jedoch auch möglich, das Verriegelungselement 15 jeweils am Unterteil 1 und das Gegenverriegelungselement 16 jeweils an der Abdeckung 3 vorzusehen, oder eines der Verriegelungselemente am Unterteil 1 und das andere Verriegelungselement an der Abdeckung 3 anzubringen und entsprechend das zugehörige Gegenverriegelungselement an der Abdeckung 3 bzw. am Unterteil 1 vorzusehen.

In der dargestellten Ausführungsform ist das Verriegelungselement 15 ein Filmscharnier 20 mit einem Sperriegel 17 am freien Ende, während das Gegenverriegelungselement 16 als Hinterschneidung 18 ausgebildet ist, in welche der Sperriegel 17 einrastet, wobei die Hinterschneidung 18 in eine Ausnehmung 19 für das Filmscharnier 20 übergeht.

Wie aus den Figuren der Zeichnungen ersichtlich ist, sind das Verriegelungs- und Gegenverriegelungselement 15 bzw. 16 in der Längsmitte des vorderen und hinteren Endes 12 bzw. 13 des Unterteils 1 und der Abdeckung 3 vorgesehen.

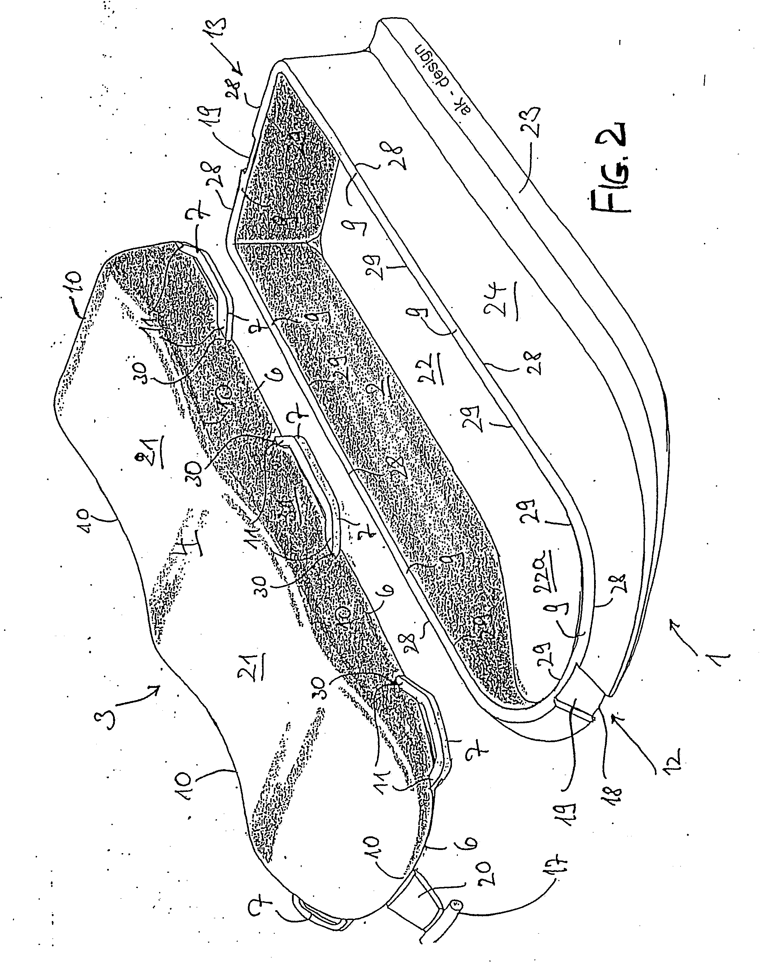

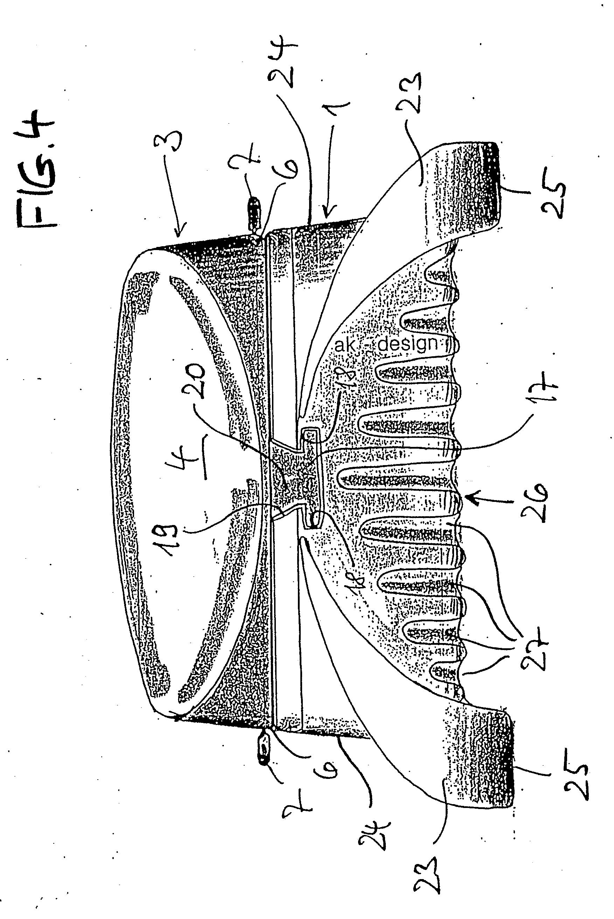

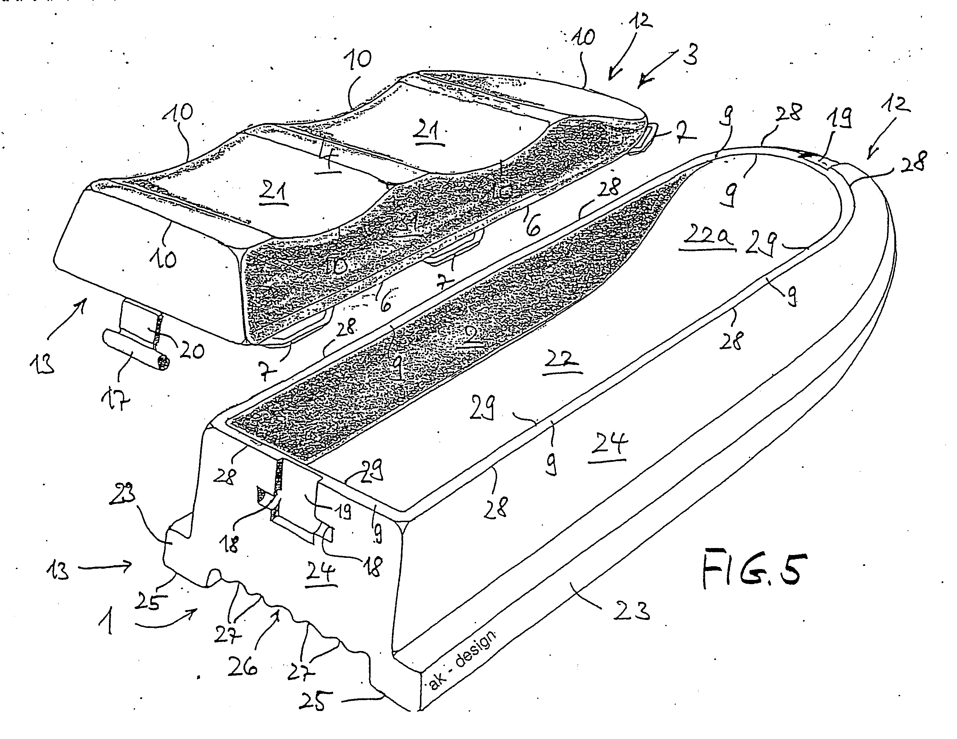

Wie die Figuren 1, 2, 4 und 5 zeigen, ist die Abdeckung 3 im Längsschnitt generell keilförmig ausgebildet und auf ihrer Oberseite mit Sitzmulden 21 versehen, und zwar sind vorliegend 2 Sitzmulden 21 vorgesehen, die in der Längsrichtung des Sportgeräts stark konkav sind, dagegen sind diese Sitzmulden in der Querrichtung des Sportgeräts nur leicht konkav ausgebildet. Das Unterteil 1 hat, wie insbesondere die Figuren 2 und 5 erkennen lassen, die generelle Form eines flachen, langgestreckten, oben offenen Kastens, wobei der Kasteninnenraum die Vertiefung 2 ist. Dieser flache Kasten hat einen generell rechteckigen Grundriß, dessen Schmalseite, die das vordere Ende 12 bildet, gerundet ist.

Die Vertiefung 2 verjüngt sich am vorderen Ende 12 keilförmig, indem der Boden 22 des Kastens in seinem vorderen Bereich 22a schräg nach oben zu verläuft.

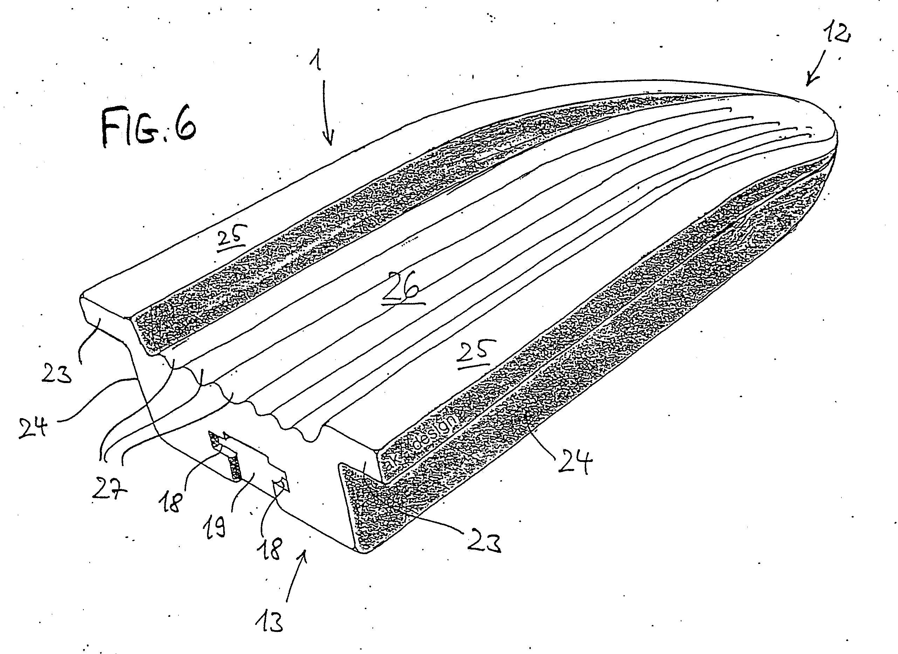

Die gleichzeitig als Fußrasten bzw. -auflagen dienenden Kufen 23 sind, wie besonders gut aus den Figuren 5 und 6 ersichtlich ist einstückig mit den übrigen Teilen des Unterteils 1 ausgebildet und stehen seitlich über die äußern Seitenwände 24 des flachen Kastens vor.

Die bezüglich der Gleitfläche 25 der Kufen 23 nach oben zu vertiefte Außenfläche 26 des Bodens ist, wie die Figuren 5 und 6 zeigen, mit Führungsrillen 27 versehen, die parallel zu den Kufen 23 verlaufen und sich vorzugsweise über im. wesentlichen die gesamte Länge dieser Außenfläche 26 erstrecken.

Das Unterteil 1 und die Abdeckung 3 sind aus Polyäthylen oder einem anderen Kunststoff derart hohl geblasen, daß der Kunststoff den jeweiligen Hohlraum flüssigkeitsdicht umschließt.

Das Sportgerät gemäß den Figuren 1 bis 6 und dessen Unterteil 1 und Abdeckung 3 können insbesondere in der folgenden Weise benutzt werden:

(a) In der in Figur 1 dargestellten Zusammenbaukonfiguration von Unterteil 1 und Abdeckung 3, in welcher die Oberseite 4 mit den Sitzmulden 21 nach oben gerichtet ist, kann das Sportgerät als zweisitziger Rodelschlitten verwendet werden.

(b) In der in Figur 3 gezeigten Zusammenbaukonfiguration des Sportgeräts, in welcher Unterteil 1 und Abdeckung 3 derart aneinander befestigt sind, daß die flache Unterseite 5 nach oben gerichtet ist, kann das Sportgerät als Rodelschlitten verwendet werden, mit dem ein Benutzer auf dem Bauch oder auf dem Rücken liegend rodelt.

(c) In der Zusammenbaukonfiguration der Figur 3 kann das Sportgerät im Sommer als Badeboard verwendet werden, auf das sich der Benutzer legt, während dieses im Wasser schwimmt, wobei der Benutzer durch die hohe Auftriebskraft, welche die Kombination von Unterteil 1 und Abdeckung 3 gewährleistet, weitgehend über dem Wasser gehalten wird.

(d) Das Unterteil für sich, wie es beispielsweise aus den Figuren 2 und 5 ersichtlich ist, kann im Sommer als Boot verwendet werden, indem sich der Benutzer in die Vertiefung 2 setzt.

(e) Schließlich kann die Abdeckung 3 für sich, wie sie aus den Figuren 2 und 5 ersichtlich ist, als Funboard benutzt werden, das heißt als Schwimmhilfe, mit der sich der Benutzer im Wasser tummelt.

Wie in den Figuren 1 bis 3 dargestellt, können die als Handgriffe o. dgl. ausgebildeten Vorsprünge 7 an der Eintrittsstelle in die Seitenwand 31 der Abdeckung 3 in ihrer Unter- und/oder Oberseite 8 bzw. 11 eine Ausnehmung, Nut o. dgl. 30 aufweisen, welche zusammen mit der Seitenwand 31 an dieser Stelle 32 bzw. 33 den äußeren, oberen und inneren Rand 28 bzw. 9 bzw. 29 der Vertiefung 2 umgreift, wodurch sich eine ausgezeichnete Einsteckverbindung zwischen dem Unterteil 1 und der Abdeckung 3 ergibt.

Es sei weiter darauf hingewiesen, daß bei im oberen Bereich senkrechten Innenwänden der Vertiefung 2 die Seitenwand 31 in einem Bereich senkrecht, das heißt unverjüngt, verlaufen kann, der sich in einer Höhe H von dem unteren Rand 6 nach dem oberen Rand 10 der Abdeckung erstreckt, wobei diese Höhe H gleich der Summe aus den Vertikalhöhen A und B und der vertikalen Dicke D der Vorsprünge 7 im Bereich ihrer Eintrittsstellen in die Seitenwand 31 der Abdeckung ist.

Allgemein gesagt, können die inneren Seiten- bzw. Umfangswände der Vertiefung 2 in deren oberem Endbereich und die äußeren Seiten- bzw. Umfangswände 31 der Abdeckung 3 einen "zylindrischen" Bereich (d. h. im Querschnitt gleichbleibenden Bereich) für die formschlüssige Steckverbindung zwischen Unterteil 1 und Abdeckung 3 aufweisen, der bei der Abdeckung 3 die Höhe H von deren unterem Rand 6 aus hat.

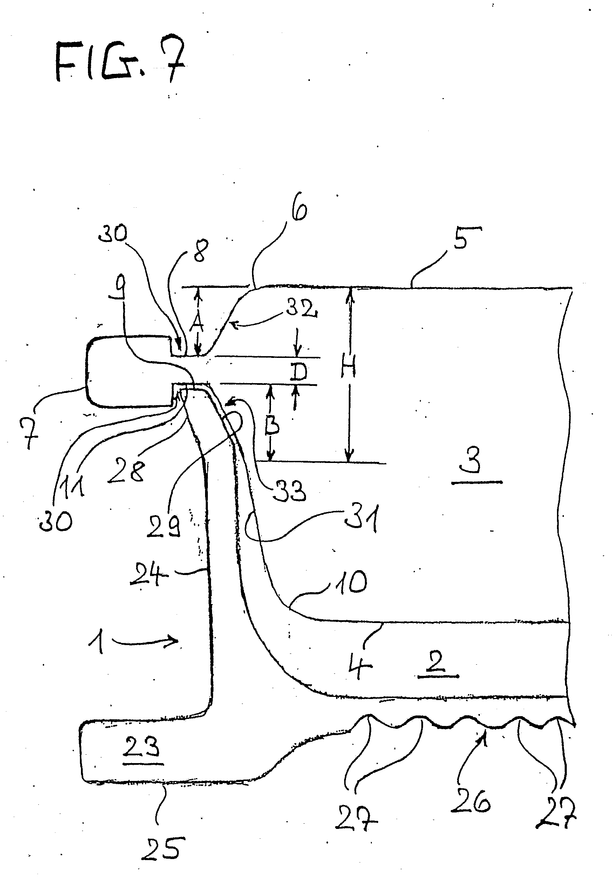

Um jedoch, insbesondere Kindern, das Zusammenfügen des Unterteils 1 und der Abdeckung 3 zu erleichtern, wird eine Ausführungsform von der Art besonders bevorzugt, wie sie in Figur 7 dargestellt ist:

Hier verläuft der obere, innere Rand 29 der Vertiefung 2 nach dem Äußeren der Vertiefung 2 zu konisch abgeschrägt, so daß er eine trichterartige Erweiterung der Vertiefung 2 bildet, in die der konisch-komplementär dazu ausgebildete Bereich 32 des unteren Rands 6 der Abdeckung 3 leicht einfügbar ist. Insgesamt ist der Bereich 32, 33 des unteren äußeren Rands 6 der Abdeckung 3 im Querschnitt doppeltkonisch ist, so daß die Abdekkung 3 in einer Position mit ihrer Oberseite 4 und in einer anderen, in Figur 7 dargestelltenPosition mit ihrer Unterseite 5 nach oben in den konisch-komplementär dazu erweiterten Bereich des oberen inneren Rands 29 einsetzbar ist.

Diese Ausbildungsart erleichtert auch das Abnehmen der Abdeckung 3 von dem Unterteil 1, da sich beide nicht miteinander verklemmen können.

Hinsichtlich der Ausnehmungen 30 in den Vorsprüngen 7 und der Abmessungen A, B, D und H, die in Figur 7 angegeben und dargestellt sind, wird auf die obigen Ausführungen verwiesen.

Außerdem sei darauf hingewiesen, daß die Konizität der Bereiche 28, 29, 32 und 33 in Figur 7 sehr deutlich dargestellt ist und es in der Praxis oft bereits eine geringere Konizität genügt.

## Ansprüche

1. Sportgerät, das als Rodelschlitten verwendbar ist, umfassend einen innen hohlen Körper aus Kunststoff, dadurch **gekennzeichnet**, daß der Körper (1,3) ein bootartiges doppelwandiges Unterteil (1) mit einer nach oben offenen, vorzugsweise flachen Vertiefung (2) und eine die Vertiefung (2) im wesentlichen verschließende, flache Abdeckung (3) umfaßt, die beide als innen hohle Kunststoffteile ausgebildet und fest aufeinander anbringbar, insbesondere mit einer Vorrichtung (14) zum festen Anbringen der Abdeckung (3) auf dem Unterteil (1) versehen sind.

2. Sportgerät, nach Anspruch 1, dadurch **gekennzeichnet**, daß die unteren seitlichen Ränder (6) der Abdeckung (3) formschlüssig in die Vertiefung (2) passen und von diesen seitlichen Rändern (6) Vorsprünge (7) nach der Seite zu vorstehen, die sich auf den oberen Rändern (9) der Vertiefung (2) abstützen.

3. Sportgerät nach Anspruch 2, dadurch **gekennzeichnet**, daß die Vorsprünge (7) als Haltegriffe ausgebildet sind.

4. Sportgerät nach Anspruch 1, 2 oder 3, dadurch **ge kennzeichnet**, daß die Vorrichtung (14) zum festen Anbringen der Abdeckung (3) auf dem Unterteil (1) wenigstens ein Verriegelungselement (15) an der Abdeckung (3) und wenigstens ein damit in Verriegelungseingriff bringbares Gegenverriegelungselement (16) an dem Unterteil (1) umfaßt, deren Verriegelungseingriff Unterteil (1) und Abdeckung (3) fest miteinander verbindet.

5. Sportgerät nach Anspruch 4, dadurch **gekennzeichnet**, daß das Verriegelungselement (15) ein Filmscharnier (20) mit einem Sperriegel (17) an dessen freiem Ende und das Gegenverriegelungselement (16) eine Hinterschneidung (18) ist, in welche der Sperriegel (17)einfügbar ist, oder umgekehrt.

6. Sportgerät nach Anspruch 5, dadurch **gekennzeichnet**, daß die Hinterschneidung (18) in eine Ausnehmung (19) für das Filmscharnier (20) übergeht.

7. Sportgerät nach Anspruch 4, 5 oder 6, dadurch **gekennzeichnet**, daß am vorderen und hinteren Ende (12,13) des Unterteils (1) und der Abdeckung (3) je ein Verriegelungs- bzw. Gegenverriegelungselement (15,16) vorgesehen ist.

8. Sportgerät nach Anspruch 7, dadurch **gekennzeichnet**, daß das Verriegelungs- und Gegenverriegelungselement (15,16) in der Längsmitte des vorderen und hinteren Endes (12,13) des Unterteils (1) und der Abdeckung (3) vorgesehen ist.

9. Sportgerät nach einem der Anprüche 1 bis 8, dadurch **gekennzeichnet**, daß die Abdeckung (3) auf ihrer Oberseite (4) Sitzmulden (21) aufweist.

10. Sportgerät nach einem der Ansprüche 1 bis 9, dadurch **gekennzeichnet**, daß die Abdekkung (3) auf ihrer Unterseite (5) flach, insbesondere, eben,ist.

11. Sportgerät nach Anspruch 2 oder 3 und nach Anspruch 10, dadurch **gekennzeichnet**, daß die Unterseiten (8) der Vorsprünge (7), insbesondere der Haltegriffe, in gleichen Vertikalabständen (A) von der Ebene der Unterseite (5) der Abdeckung (3) angeordnet sind.

12. Sportgerät nach einem der Ansprüche 1 bis 11, dadurch **gekennzeichnet**, daß die Abdekkung (3) im Längsschnitt keilförmig ist.

13. Sportgerät nach einem der Ansprüche 1 bis 12, dadurch **gekennzeichnet**, daß das Unterteil (1) die generelle Form eines flachen, langgestreckten, oben offenen Kastens hat.

14. Sportgerät nach Anspruch 13, dadurch **gekennzeichnet**, daß der flache Kasten einen generell rechteckigen Grundriß mit einer gerundeten Schmalseite am vorderen Ende (12) hat.

15. Sportgerät nach Anspruch 13 oder 14, dadurch **gekennzeichnet**, daß sich die Vertiefung (2) am vorderen Ende (12) keilförmig verjüngt, indem der Boden (22) des Kastens am vorderen Ende (22a) bogenförmig oder schräg nach ogen zu verläuft.

16. Sportgerät nach einem der Ansprüche 1 bis 15, dadurch **gekennzeichnet**, daß die Kufen (23) seitlich über die äußeren Seitenwände (24) des Unterteils (1), insbesondere des flache langgestreckten Kastens, vorstehen.

17. Sportgerät nach einem der Ansprüche 1 bis 16, dadurch **gekennzeichnet**, daß die bezüglich der Kufen (23) vertiefte Außenfläche des Bodens (22) mit Führungsrillen (27) versehen ist, die parallel zu den Kufen (23) verlaufen.

18. Sportgerät nach einem der Ansprüche 1 bis 17, dadurch **gekennzeichnet**, daß das Unterteil (1) oder die Abdeckung (3) aus Polyäthylen hergestellt ist.

19. Sportgerät nach einem der Ansprüche 1 bis 18, dadurch **gekennzeichnet**, daß sich der Querschnitt der Abdeckung (3) von etwas oberhalb der Oberseite (11) der Vorsprünge (7) zu der Oberseite (4) der Abdeckung hin verjüngt, so daß die Abdeckung (3) mühelos mit ihrer Oberseite (4) nach unten in die Vertiefung (2) einfügbar ist, wobei sie über eine vorbestimmte Vertikalhöhe (B) von der Oberseite (11) der Vorsprünge (7) aus formschlüssig in die Vertiefung (2) paßt.

20. Sportgerät nach Anspruch 19, dadurch **gekennzeichnet**, daß die Seitenflächen der Abdeckung (3), welche deren Unterseite (5) mit deren Oberseite (4) verbinden, einen Winkel von etwas weniger als 90° mit der flachen, insbesondere ebenen, Unterseite (5) der Abdeckung (3) ab einem vorbestimmten Vertikalabstand (A) über der Oberseite (11) der Vorsprünge (7) einschließen.

21. Sportgerät nach einem der Ansprüche 3 bis 20, dadurch **gekennzeichnet**, daß die Haltegriffe (7) bogenförmig ausgebildet sind, wobei die Bogenenden in die Abdeckung (3) übergehen.

22. Sportgerät nach einem der Ansprüche 1 bis 21, dadurch **gekennzeichnet**, daß die Ober- und/oder Unterseiten (8, 11) der Vorsprünge (7) eine den äußeren, inneren und oberen seitlichen Rand (28, 29) der Vertiefung (2) zusammen mit der äußeren Seitenwand der Abdeckung (3) umgreifende Ausnehmung, Nut o. dgl. (30) bilden.

23. Sportgerät nach einem der Ansprüche 1 bis 22, dadurch **gekennzeichnet**, daß der obere, innere Rand (29) der Vertiefung (2) nach dem Äußeren der Vertiefung zu konisch abgeschrägt verläuft, so daß er eine trichterartige Erweiterung der Vertiefung (2) bildet, in die der komplementär dazu ausgebildete Bereich (32) des unteren Rands (6) der Abdeckung (3) leicht einfügbar ist.

24. Sportgerät nach Anspruch 23, dadurch **gekennzeichnet**, daß der Bereich (32, 33) des unteren äußeren Rands (6) der Abdeckung (3) im Querschnitt doppeltkonisch ist, so daß die Abdeckung (3) in einer Position mit ihrer Oberseite (4) und in einer anderen Position mit ihrer Unterseite (5) nach oben in den konisch komplementär dazu erweiterten Bereich des oberen inneren Rands (29) einsetzbar ist.

FIG.1

EP 0 373 502 A2

ak - design

Fig. 2

FIG.3

EP 0 373 502 A2

ak - design

FIG.4

EP 0 373 502 A2

FIG.5

EP 0 373 502 A2

FIG.6

# FIG. 7